# EUROPÄISCHE PATENTSCHRIFT

(11) **EP 3 217 024 B1**
(45) Veröffentlichungstag und Bekanntmachung des Hinweises auf die Patenterteilung: **08.12.2021**
(21) Anmeldenummer: 17151423.5
(22) Anmeldetag: 13.01.2017
(51) Int. Cl.: F16B 11/00, F16B 37/04

(54) **VORRICHTUNG UND VERFAHREN ZUR ANBRINGUNG VON FUNKTIONSELEMENTEN AN EINEM INSBESONDERE AN EINEM AUS FASERVERSTÄRKTEN KUNSTSTOFF BESTEHENDEN BAUTEIL**
DEVICE AND METHOD FOR ATTACHING FUNCTIONAL ELEMENTS TO A COMPONENT, IN PARTICULAR TO A COMPONENT MADE OF FIBER-REINFORCED PLASTIC
DISPOSITIF ET PROCEDE DE FIXATION D'ELEMENTS FONCTIONNELS A UN COMPOSANT, EN PARTICULIER A UN COMPOSANT EN PLASTIQUE EN FIBRE RENFORCÉ

(30) Priorität: 08.03.2016 DE 102016104187
(43) Veröffentlichungstag der Anmeldung: 13.09.2017
(73) Patentinhaber: Profil Verbindungstechnik GmbH & Co. KG, 61381 Friedrichsdorf (DE)
(72) Erfinder: Diehl, Oliver, 61250 Usingen (DE); Humpert, Richard, 61231 Bad Nauheim (DE)
(74) Vertreter: Manitz Finsterwald Patent- und Rechtsanwaltspartnerschaft mbB

(56) Entgegenhaltungen:
- EP-A2- 2 439 055
- WO-A2-2011/138674
- FR-A1- 2 721 075
- JP-A- H1 157 572

## Beschreibung

Die vorliegende Erfindung betrifft eine Vorrichtung zur Anbringung von Funktionselementen z.B. aus Metall an einem Bauteil, insbesondere an einem aus faserverstärkten Kunststoff bestehenden Bauteil, unter Anwendung eines Setzkopfes, wobei das Funktionselement eine mit Klebstoff versehene Anlagefläche aufweist. Ferner befasst sich die vorliegende Erfindung mit einem entsprechenden Verfahren gemäß den Oberbegriff vom Anspruch 9.

Funktionselemente aus Metall mit einem eine Anbringungsfläche bildenden Flansch größeren Durchmessers und einem innerhalb der Anbringungsfläche angeordneten und sich vom Flansch weg erstreckenden Zentrierabschnitt sind zur Verwendung mit metallischen Bauteilen, wie Blechteilen, weit verbreitet und gut bekannt. Ein Beispiel ist der europäischen Patentschrift EP 1116891 der vorliegenden Anmelderin zu entnehmen, die eine so genannte RND-Mutter beschreibt. Das heißt, das Funktionselement ist in der genannten europäischen Patentschrift als Mutterelement ausgebildet. Dort ist der Zentrierabschnitt als Nietabschnitt ausgebildet, der nach bzw. bei der Anbringung verformt wird, um ein Nietbördel zu bilden.

Im Zuge der Bestrebung nach Formteilen geringen Gewichts, jedoch hoher Festigkeit, werden heutzutage anstelle von Blechteilen häufig Kunststoffbauteile benutzt, vornehmlich in Form von Verbundwerkstoffen, wie beispielsweise mit glasfaser- oder kohlenfaserverstärkten Kunststoffen, wobei allerdings auch andere Verstärkungsmaterialien in Frage kommen, üblicherweise solche mit hochfesten Verstärkungsfasern oder aus solchen Fasern hergestellten Geweben. Auch Bauteile aus solchen Kunststoffen müssen häufig mit Befestigungselementen versehen werden, wofür eine beschränkte Auswahl von Möglichkeiten bereits bekannt ist. In diesem Zusammenhang sind beispielsweise Einpresselemente bekannt, die in angepasste Bohrungen des Kunststoffmaterials üblicherweise bei erhöhten Temperaturen des Materials eingepresst werden. Das Kunststoffmaterial fließt um die Einsätze herum und in dort vorgesehene Hinterschneidungen und verankert die Einsätze in kaltem Zustand. Die Einsätze können beispielsweise mit einem Innengewinde versehen werden. Solche Einsätze haben zwar durchaus ihre Berechtigung, sind aber meistens nur beschränkt belastbar, da sie sonst im Kunststoffteil oder aus dem Kunststoffbauteil herausgezogen werden können. Die Verwendung von solchen Einsätzen ist bei relativ dünnen Kunststoffbauteilen besonders problematisch. Solche faserverstärkten Kunststoffbauteile oder mit einem Gewebe verstärktes Kunststoffbauteil werden häufig als Organobleche bezeichnet.

Es ist aus der EP-2439055-A bekannt, ein Funktionselement ähnlich eines RND-Elements mit einem Klebstoffring zu versehen, um dieses an ein Bauteil, z.B. an ein Kunststoffbauteil, insbesondere ein faserverstärktes Kunststoffbauteil oder ein mit einem Gewebe verstärkten Kunststoffbauteil anzukleben. Das Mutterelement gemäß der EP-2439055-A ist zwar als Zentrierelement ausgebildet, der dort gezeigte Zentrierabschnitt könnte allerdings auch als Nietabschnitt ausgebildet werden, wobei das Funktionselement dann nicht nur mit dem Bauteil verklebt wird, sondern auch durch Umbördelung des Nietabschnitts am Bauteil zusätzlich befestigbar wäre.

Es geht bei der vorliegenden Erfindung um die Anbringung des Klebstoffs an das Funktionselement und die hier beanspruchte Vorrichtung bzw. das hier beanspruchte Verfahren kann im Prinzip mit allen Arten von Befestigungselementen verwendet werden.

Funktionselemente können durchaus auch andere Formen haben. Beispielsweise kann ein Bolzenelement anstelle eines Gewindes einen zylindrischen Schaftteil aufweisen, der zur Lagerung eines Hebels, einer Seilrolle oder eines anderen Bauteils dienen kann. Auch ein hohles Element, ähnlich einem Mutterelement, kommt in Frage, bei dem anstelle eines Gewindezylinders eine glatte Bohrung vorgesehen ist, die zur Lagerung einer Welle dient. Es sind ferner Funktionselemente bekannt, die zur Aufnahme eines eingesteckten Stiftes oder eines Clips ausgebildet sein können. Erfindungsgemäße Funktionselemente können auch zur Ausübung der entsprechenden Funktionen ausgebildet werden.

Das Vorsehen von Klebstoff an Funktionselementen kann sich als problematisch gestalten. Selbst wenn der Klebstoff geschützt am Funktionselement untergebracht ist oder in einer trockenen Form vorliegt, beispielsweise in der Form von kleinen vermischten Kapseln aus Klebstoff und Härter verwendet wird, die erst unter Druck platzen und einen aktivierten unter Druck oder anderweitig aushärtenden Klebstoff bilden, besteht immer die Gefahr, dass der Klebstoff während der Handhabung der Funktionselementen oder während des Transports von einer Arbeitsstätte zu einer anderen beschädigt wird oder gar verloren geht. Diese Gefahr besteht auch dann wenn der Klebstoff in Form von Ringen aus doppelseitigem Klebeband besteht.

Aufgabe der vorliegenden Erfindung ist es eine Vorrichtung und ein Verfahren vorzusehen, die bzw. das die oben bezeichnete Problematik der Beschädigung oder den Verlust des Klebstoffs weitestgehend verhindert.

Zur Lösung dieser Aufgaben wird erfindungsgemäß eine Vorrichtung der eingangs genannten Art vorgesehen, mit dem besonderen Kennzeichen des Anspruchs 1.

An dieser Stelle soll auf einige weitere Schriften zum Stand der Technik verwiesen werden. Die WO 2011/138674 befasst sich relativ allgemein mit der Anbringung von Klebstoffelementen, hier in Form von sphärischen Körpern auf Gegenständen. Insbesondere befasst sich die Schrift mit der Anbringung der Klebstoffelemente auf ein "Bonding-Part", das anschließend an einen Gegenstand wie einen Spiegel angeklebt wird.

Die Klebstoffelemente werden im festen Zustand als Schüttgut der Vorrichtung zugeführt (und nicht in der Form von flüssigem Klebstoff). Ferner ist die Anbringungsvorrichtung getrennt von irgendeiner (nicht näher dargestellten) Setzvorrichtung, die zur Anbringung des Bonding-Elements auf den Gegenstand vorgesehen ist.

Die FR 2 721 075 A1 befasst sich mit der Anbringung von Scheiben an Bolzenelemente mittels Klebstoffablagerungen auf den Scheiben, wobei die Bolzenelemente mit angeklebten Scheiben dann in einem Karton 15 abgelegt werden. Diese Schrift hat nichts mit der Anbringung eines Klebstoffs in einem Setzkopf zu tun.

Die JP 11057572 A befasst sich mit einer Vorrichtung zur Anbringung von Klebstoff auf eine gedrückte Schaltung 3 mittels eines Abgabekopfes 1. Es wird auch eine Kamera 7 vorgesehen, die imstande ist, die Form der angebrachten Klebstoffablagerungen zu prüfen und ggf. die Einstellung des Abgabekopfes zu ändern. Diese Schrift hat somit nichts mit der anbringung von Befestigungselementen mittels eines Setzkopfes zu tun.

Bei der EP 2 439 055 A2 geht es um die Anbringung von Befestigungselementen, die bereits vor dem Eintreten in den Setzkopf mit Klebstoffringen versehen werden und hat mit der Anbringung vom flüssigen Klebstoff in einem Setzkopf nichts zu tun.

Wenn in dieser Anmeldung von Funktionselementen z.B. aus Metall die Rede ist, soll zum Ausdruck gebracht werden, dass die Funktionselemente üblicherweise nur aus Metall bestehen. Es ist allerdings nicht ausgeschlossen, dass ein Funktionselement aus faserverstärktem Kunststoff zur Anwendung gelangt, wobei es auch denkbar wäre ein solches Funktionselement mit einem Metallischen Kern auszustatten, zum Beispiel nach Art eines Gewindeeinstzes.

Dadurch, dass der Klebstoff erst innerhalb des Setzkopfes oder unmittelbar vor dem Eintritt in den Setzkopf auf die Funktionselemente aufgebracht wird, ist die Gefahr, dass der Klebstoff vor dem Erreichen des Setzkopfes beschädigt oder verloren geht oder anderweitig beeinträchtigt wird, zum Beispiel durch Alterung, nicht mehr vorhanden.

Dabei kann die Vorrichtung so ausgelegt werden, dass sie ein Injektionssystem aufweist, um den Klebstoff ringförmig oder in Tropfenform auf der Anlagefläche innerhalb des Setzkopfes anzubringen. Hierdurch kann der Klebstoff auf den erwünschten Bereich der Anlagefläche begrenzt werden.

Die Anbringung der Funktionselemente in Kunststoffbauteile mittels eines Setzkopfes kann mit vielen verschiedenen Vorrichtungen erfolgen. Denkbar ist es, den Setzkopf in einer Presse zu verwenden. Hier kann der Setzkopf, auf dem das Bauteil angeordnet ist, nach oben weisend in einem unteren Werkzeug der Presse oder in einer Zwischenplatte der Presse angeordnet und das Funktionselement mittels des Setzkopfs von unten auf das Kunststoffbauteil gedrückt werden, und zwar gegen eine Matrize, die in einer Zwischenplatte der Presse bzw. einem oberen Werkzeug der Presse gehalten wird. Dabei kann das Bauteil in an sich bekannter Weise vorgelocht oder das Funktionselement selbststanzend in das Bauteil eingebracht werden.

Die Anordnung mit dem Setzkopf nach oben weisend, was gleichzeitig bedeutet, dass die Anlagefläche des Funktionselement nach oben weist, ist deshalb bevorzugt, da der Klebstoff zumindest im Wesentlichen verlustfrei auf den Funktionselementen innerhalb des Setzkopfes transportiert wird.

Nichtsdestotrotz ist es auch denkbar, den Setzkopf nach unten weisend in einer Zwischenplatte der Presse oder im oberem Werkzeug der Presse anzuordnen und die Matrize dann im unteren Werkzeug der Presse oder in der Zwischenplatte der Presse vorzusehen, das bzw. die das Bauteil von der Unterseite abstützt.

Für jeden Hub der Presse können dann ein Funktionselement oder mehrere Funktionselemente gleichzeitig an das Kunststoffbauteil angebracht werden. Die Presse kann dann so eingestellt werden, dass sie einerseits nur auf das Maß schließt, das erforderlich ist, um das Funktionselement erfindungsgemäß an das Kunststoffbauteil anzubringen und einen ausreichenden Druck auf den Klebstoff auszuüben, um die Klebefunktion sicherzustellen.

Eine andere Möglichkeit besteht darin, mittels eines Roboters Funktionselemente in das Kunststoffbauteil einzusetzen bzw. an dieses anzubringen. Der Roboter kann hier beispielsweise eine Vorrichtung ähnlich einem Setzkopf tragen, der das Element auf die eine Seite des Kunststoffbauteils drückt, während das Kunststoffbauteil auf eine Unterlage oder auf eine Matrize von oben gehalten oder von unten abgestützt wird, die ebenfalls vom Roboter getragen wird.

Ferner kann eine stationäre Einrichtung zur Halterung der Matrize verwendet werden und nur der Setzkopf vom Roboter betätigt werden. Auch eine umgekehrte Anordnung wäre denkbar, d.h. der Roboter drückt die Matrize auf die eine Seite eines Kunststoffbauteils, dessen andere Seite von einer Halterung gehalten wird, die beispielsweise das Funktionselement abstützt.

Außerdem ist es möglich mit einer kraftbetriebenen Zange zu arbeiten, die das Kunststoffbauteil und den Setzkopf gegeneinander presst bzw. eine Matrize von der einen Seite des Kunststoffbauteils hält und den Setzkopf von der anderen Seite auf das Kunststoffbauteil und auf die Matrize drückt.

Egal welche Vorrichtung zur Betätigung des Setzkopfes verwendet wird, ist das Injektionssystem vorzugsweise oberhalb der Anlagefläche des jeweils mit Klebstoff zu versehenen Funktionselements angeordnet, um den Klebstoff nach unten auf diese Anlagefläche abzugeben. Hierdurch wird die Gefahr der Kontamination des Setzkopfes mit Klebstoff minimiert.

Die erfindungsgemäße Vorrichtung ist vorzugsweise dadurch ausgebildet, dass das Injektionssystem aus einer den Klebstoff führenden Leitung, einem Klebstoff von der Leitung aufnehmenden und einen Verteilerkanal aufweisenden Verteiler sowie mehrere Klebstoffe von dem Verteilerkanal verteilenden Injektionsbohrungen bzw. Düsen besteht. Eine derartige Anordnung lässt sich sehr kompakt bauen.

Dadurch, dass das Injektionssystem im Bereich der Mündung des Zuführkanals für die Funktionselemente in den Setzkopf angeordnet ist, ergibt sich der besondere Vorteil, dass, wenn Kontamination durch überschüssigen Klebstoff entsteht, diese auf den Bereich des Mundstücks des Zuführkanals weitestgehend beschränkt ist, der relativ einfach zu reinigen ist. Insbesondere wird das Mundstück des Zuführkanals mittels einer bewegbaren Rastnase lösbar mit dem Setzkopf verbunden.

Der Zuführkanal mit dem Mundstück kann dann auf einfache Weise vom Setzkopf zwecks Reinigung getrennt werden.

Die erfindungsgemäße Vorrichtung ist ferner vorzugsweise so ausgebildet, dass nach der Anbringung des Klebstoffs auf ein Funktionselement dieses Funktionselement entweder sofort in den Stempelkanal des Setzkopfes hineingeschoben oder erst in einer Warteposition vor dem Stempelkanal gebracht wird.

Eine weitere bevorzugte Variante der vorliegenden Erfindung besteht darin, dass ein Spülsystem im Setzkopf integriert ist, um Klebstoffreste bei Bedarf aus dem Setzkopf auszuspülen. Wenn also Kontamination mit Klebstoff ein Problem darstellen sollte, so kann das Spülsystem verwendet werden, um die Kontamination mittels eines den Klebstoff mindestens in nicht ausgehärtetem Zustand auflösenden Spülmittels aufzulösen und zu entfernen.

Besonders günstig ist es, wenn das Spülsystem Spülmittel in das Injektionssystem, beispielsweise in dessen Verteilerkanal einspeist. Hierdurch kann das Injektionssystem für den doppelten Zweck ausgenützt werden, nämlich zur Anbringung von Klebstoff und Verteilung des Klebstoff auflösenden Spülmittels und das Spülmittel wird dort angewendet, wo Kontamination am ehesten zu erwarten ist.

Besonders bevorzugte Verfahren zur Lösung der erfindungsgemäßen Aufgabe sind den Ansprüchen 9 bis 14 zu entnehmen.

Die Erfindung wird nachfolgend anhand von Ausführungsbeispielen unter Bezugnahme auf die Zeichnungen näher erläutert, welche zeigen:
- Fig. 1A-1C: ein Funktionselement, dessen Grundform aus der EP-2439055-A bekannt ist und hier in einer halben Draufsicht von unten (Fig. 1A), in einer halbgeschnittenen Seitenansicht (Fig. 1B) mit einer vergrößerten Darstellung des eingekreisten Bereichs der Fig. 1B (Fig. 1C) gezeigt ist,
- Fig. 2: ein Funktionselement in Form eines Bolzenelements, dessen Grundform ebenfalls aus der EP- 2439055-A bekannt ist und dessen Kopfform der des Mutterelements der Fig. 1A -1C sehr ähnlich ist.
- Fig. 3A und 3B: eine schematische Darstellung einer erfindungsgemäßen Vorrichtung in Form eines Setzkopfes zur Anbringung von Klebstoff auf Funktionselemente, die mittels des Setzkopfes an ein Bauteil angebracht werden, wobei die Fig. 3A eine perspektivischer Darstellung des Setzkopfes mit Zuführkanal ist und die Fig. 3B eine vergrößerte Darstellung des eingekreisten Bereichs der Fig. 3A zeigt,
- Fig. 4A und 4B: Schnittzeichnungen durch den erfindungsgemäßen Setzkopf gemäß den Fig. 3A und 3B.
- Fig. 5A und 5B: schematische Darstellungen des erfindungsgemäßen Setzkopfes gemäß den Fig. 3A und 3B, jedoch mit dem Zuführkanal bis auf dessen Mundstück zur Klarstellung entfernt,
- Fig. 6A und 6B: schematische Darstellungen des erfindungsgemäßen Setzkopfes gemäß den Fig. 4A und 4B, jedoch mit dem Injektionssystem zur Klarstellung entfernt,

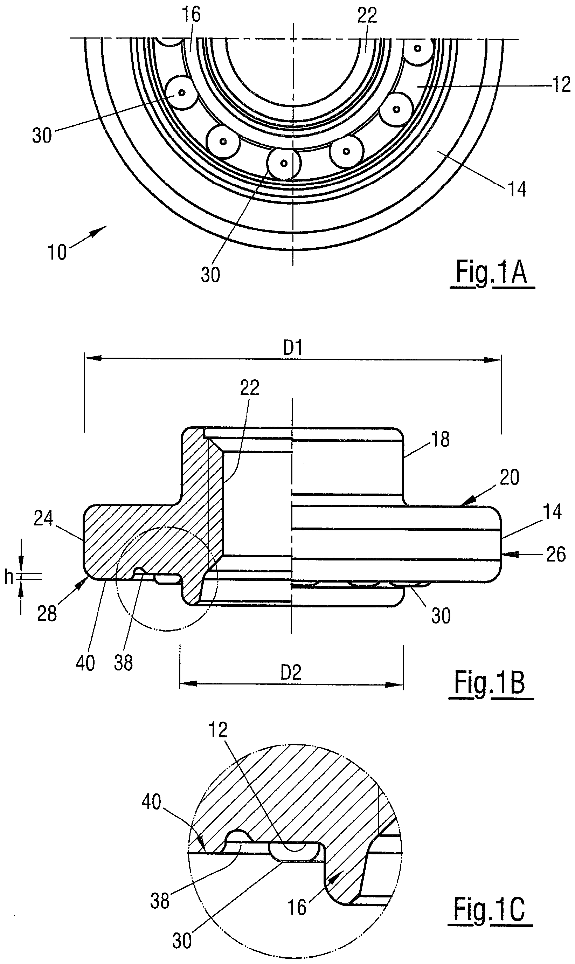

Die Fig. 1A-1C zeigen ein Funktionselement 10 aus Metall mit einem eine Anbringungsfläche 12 bildenden Flansch 14 größeren Durchmessers D1 und einen innerhalb der Anbringungsfläche 12 angeordneten und sich vom Flansch weg erstreckenden Zentrierabschnitt 16 kleineren Durchmessers D2. Das Funktionselement, das hier zur Erläuterung der vorliegenden Erfindung angewandt wird, ist für sich aus der europäischen Anmeldung EP-2439055-A bekannt. Der einzige Unterschied liegt darin, dass in der vorliegenden Anmeldung der Klebstoff 30, anstelle der ringförmigen Anordnung bei der EP- 2439055-A, in Tropfenform um den Zentrierabschnitt 16 angeordnet ist. Die ringförmige Anordnung gemäß der EP-2439055-A kann aber auch hier angewandt werden. Das Klebstoffdepot an der Anlagefläche bzw. Anbringungsfläche 12 entweder aus verteilten Klebstofftropfen oder aus einem Ring von Klebstoff bestehen.

Der Klebstoff 30 ist somit um den Zentrierabschnitt 16 herum und dem hier als Anbringungsfläche 12 genannten Bereich der Unterseite des Flansches 14 benachbart angeordnet. Wie aus den Figuren 1B und 1C ersichtlich, wird der Klebstoff in Form einzelner zumindest im Wesentlichen kreisrunden, konvexen Tropfen 30 an dem Funktionselement 10 befestigt.

Ferner sieht man, insbesondere aus den Fig. 1B und 1C, dass der Ring von Klebstofftropfen 30 in einer die Längsachse des Funktionselements einschließenden Längsebene geschnitten in etwa rechteckig ist und eine leicht konvex gewölbte Unterseite aufweist.

Oberhalb des Flansches 14 und in Fig. 1B gut ersichtlich, befindet sich ein zylindrischer Vorsprung 18, der über einen Radius in einer oberen Seite des Flansches 14 in Fig. 1B übergeht. Die so entstehende Ringfläche 20 bildet eine Andrückfläche, die bei der Befestigung des Funktionselements 10 an ein Kunststoffbauteil für die Anbringung der erforderlichen Presskraft dient. Durch das Vorsehen dieser Ringfläche 20 wird das Gewinde 22 des hier als Mutterelement ausgebildeten Funktionselements 10 gegen Verformung durch die Presskraft geschützt. Zugleich kann die axiale Höhe des auskragenden Flanschteils 14 auf das erforderliche Maß reduziert und hierdurch das Gewicht des Funktionselements ebenfalls reduziert werden.

Man sieht, dass die äußere Umfangsfläche 24 des Funktionselements eine ballige Form aufweist, die bei der Herstellung des Funktionselements in einem Kaltschlagverfahren automatisch entsteht. Diese ballige Form ist von Vorteil, da sie einerseits Gewicht spart, andererseits aber auch einen sanften Übergang vom achsparallelen Bereich 26 der äußeren Umfangsfläche des Flansches in die Unterseite des Flansches bildet. Der gerundete Übergang 28 vermeidet unerwünschte Kerben an der Oberfläche des Kunststoffbauteils bzw. des Metallbauteils.

Es wird bei dieser Ausführung eine überschüssigen Klebstoff aufnehmende Vertiefung 38 im Flansch 14 vorgesehen. Eine Vertiefung könnte alternativ oder zusätzlich im Zentrierabschnitt ausgebildet sein (nicht gezeigt).

Die Vertiefung 38 ist wie gezeigt vorzugsweise eine Ringvertiefung, die radial außerhalb der Anbringungsfläche als axiale Nut im Flansch 14 ausgebildet ist. Stattdessen könnte die Ringvertiefung als radiale Nut im Zentrierabschnitt 16 oder radial innerhalb der Anbringungsfläche 12 oder diese unterbrechend angeordnet sein.

Ferner bestünde die Möglichkeit, anstelle der Ringvertiefung 38 (oder als Ergänzung dazu - nicht gezeigt) mehrere Vertiefungen vorzusehen, die innerhalb der Anbringungsfläche und um die Längsachse des Funktionselementes herum angeordnet sind, beispielsweise Vertiefungen in der Form von sich radial erstreckenden Nuten.

In den Fig. 1A bis 1C ist der Zentrierabschnitt in Querschnitt kreisrund und ringförmig. Er könnte aber bei Bedarf eine polygonale oder eine genutete oder gerippte Form aufweisen.

Man sieht insbesondere aus der Fig. 1B, dass die Anbringungsfläche 12 radial innerhalb einer ringförmigen Anlagefläche 40 angeordnet ist und gegenüber dieser in axialer Richtung des Zentrierabschnitts 16 um einen Betrag h zurückversetzt ist, der beispielsweise etwa 0,1 mm beträgt. Somit bildet die Anlagefläche 40 eine äußere Ringfläche und die Anbringungsfläche 12 eine innere Ringfläche, wobei die überschüssigen Klebstoff aufnehmende Ringvertiefung 38 zwischen der Anlagefläche 40 und der Anbringungsfläche 12 vorgesehen ist.

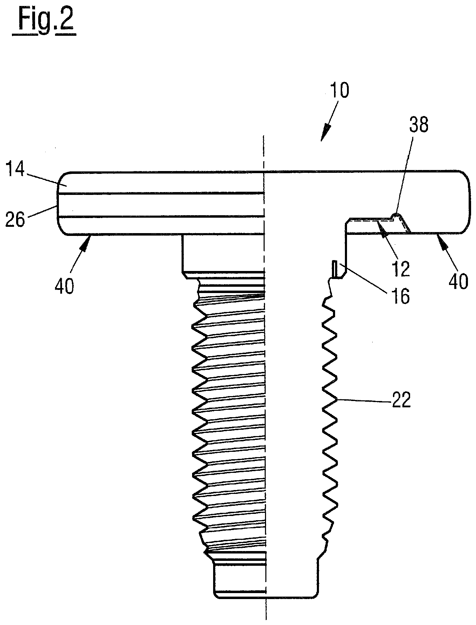

Das Funktionselement 10 ist in den Fig. 1A-1C als Mutterelement ausgebildet, es könnte aber genauso als Bolzenelement ausgebildet werden, wie in Fig. 2 gezeigt.

Es versteht sich, dass die bisherige Beschreibung der Fig. 1A bis 1C auch im übertragenen Sinne für ein Bolzenelement gemäß Fig. 2 gilt, in der die gleichen Bezugszeichen verwendet werden und die gleiche Bedeutung haben. Das Bolzenelement der Fig. 2 entspricht weitgehend dem Bolzenelement gemäß der deutschen Patentanmeldung mit dem Aktenzeichen 102004062391, nur ist die Kopfform hier ähnlich der des Mutterelements gemäß den Fig. 1A bis 1C gewählt worden.

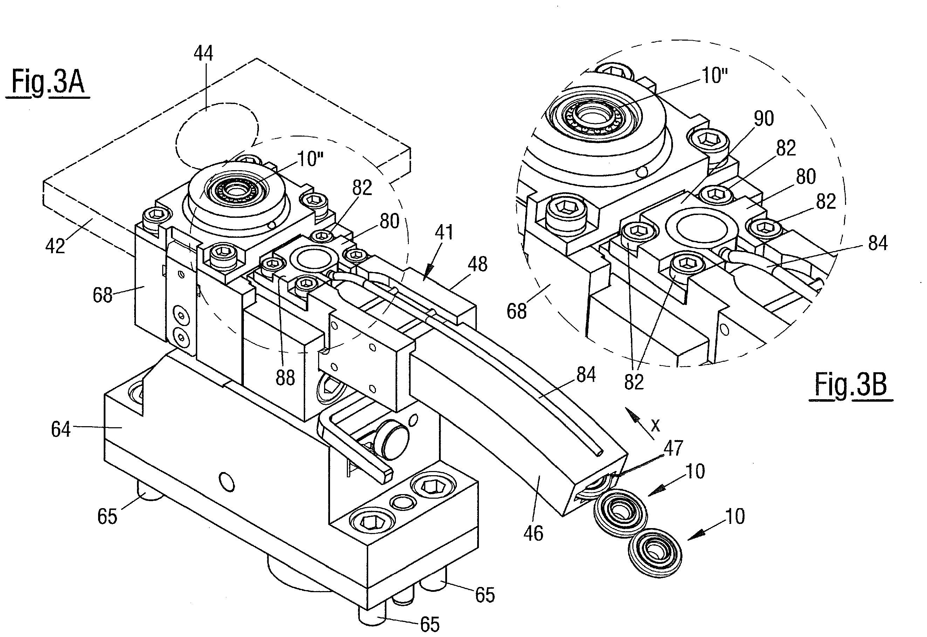

Die Fig.3A und 3B zeigen eine erfindungsgemäße Vorrichtung 41 zur Anbringung von Funktionselementen 10, z.B. aus Metall, an ein Bauteil 42, das hier lediglich schematisch durch gestrichelte Linien in Fig. 3A dargestellt ist. Es kann sich bei dem Bauteil 42 um ein Metallbauteil oder um ein faser- oder gewebeverstärktes Bauteil aus Kunststoff in Form einer Platte oder eines dreidimensionalen Formteils handeln. Das Bauteil kann vorgelocht sein, wie bei 44 angedeutet oder die Funktionselemente können selbststanzend in das Bauteil eingebracht werden, ggf. unter Anwendung eines vorlaufenden Lochstempels (nicht gezeigt). Es kann sich bei dem faser- oder gewebeverstärkten Bauteil aus Kunststoff um eine Vielzahl von unterschiedlichen Verbundwerkstoffen handeln, egal ob mit thermoplastischem oder duroplastischem Matrixmaterial und mit allerlei Verstärkungsfasern wie Glasfasern, Kohlenstofffasern, Keramikfasern usw.

Die Vorrichtung 41 besteht im Wesentlichen aus einem an sich bekannten Setzkopf, wie zum Beispiel aus der EP-C- 755749, insbesondere deren Figuren 25 bis 38D bekannt ist, jedoch modifiziert, um ein erfindungsgemäßes Injektionssystem aufzunehmen. Da der Setzkopf an sich bekannt ist, wird er hier nur insoweit beschrieben, wie es nötig ist, um die Arbeitsweise der erfindungsgemäßen Ausführung zu erklären.

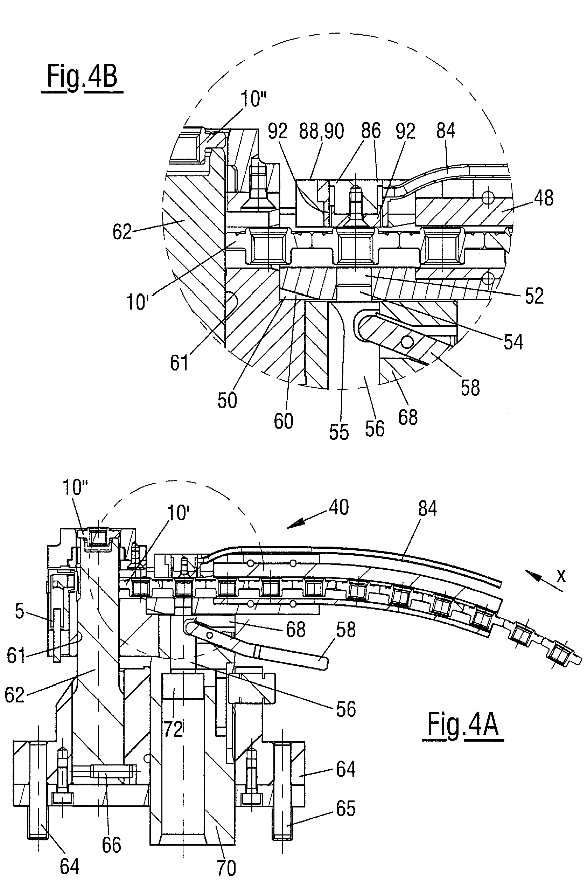

Es versteht sich, dass die Erfindung nicht auf eine bestimmte Bauart von Setzköpfen oder der damit verwendeten Funktionselemente beschränkt ist, sondern es kommen alle an sich bekannten Setzköpfe und Funktionselemente in Frage, die bereits in der Industrie bekannt sind. Es ist lediglich wichtig, dass die Funktionselemente 10 eine Anlagefläche 12 aufweisen, die mit Klebstoff versehen werden kann und vorzugsweise, dass eine Führungseinrichtung mit Führungskanal 46 oder Führungsschiene vorgesehen ist, um die Funktionselemente in den Setzkopf positionsgerecht einzuführen. Die Funktionselemente können kontinuierlich in den Setzkopf von einem Sortier- und Fördergerät, wie zum Beispiel aus der EP-C-864396 bekannt, oder chargenweise aus einem Magazin, wie beispielsweise aus der EP-B-633825, Fig. 4 bekannt, oder gar einzeln von Hand in einen Führungskanal eingelegt werden.

Die Funktionselemente 10 können im Führungskanal 46 einander berührend entlang des Führungskanals verschoben werden oder einzeln im Führungskanal durch Luftstöße in den Setzkopf 41 befördert werden, wie zum Beispiel in der EP-B-633825, Fig. 7, gezeigt ist.

Im konkreten Beispiel der Fig. 3A bis 4B werden die Funktionselemente, hier gemäß den Fig. 1A bis 1C, zunächst ohne Klebstoff 30 einander berührend in einer Kette innerhalb des Führungskanals 46 in Fig. 3A in Pfeilrichtung X nach links verschoben. Der Führungskanal 46, der durch eine Metallschiene oder Kunststoffschiene gebildet sein kann, hat einen rechteckigen äußeren Querschnitt und eine hohle Passage 47 mit einem Querschnitt entsprechend der Seitenansicht der Funktionselemente 10.

In diesem Beispiel kann der Führungskanal 46 so betrachtet werden als ob er z.B. von einem Sortier- und Fördergerat gemäß der EP-C-864396 kommt. Der Führungskanal 46 ist an seinem dem Setzkopf 41 zugewandten Ende mit einem hohlen Mundstück 48 versehen, das permanent am Führungskanal 46 angebracht ist, und welches in einer entsprechend profilierten Aufnahme 50 des Setzkopfes 41 lösbar einrastet, wie aus der Fig. 4A bzw. 4B ersichtlich ist.

Konkret weist die Unterseite des Mundstücks 48 eine Bohrung 52 auf, in die eine zylindrische mit Federkraft nach oben vorgespannte Rastnase 54 einrastet und so das Trennen des Mundstücks 48, d.h. des Führungskanals 46, vom Setzkopf verhindert. Die Rastnase 54 geht über eine Ringschulter 55 in einen Bolzen 56 größeren Durchmesser über, die gegen die Unterseite des Mundstücks 48 drückt und somit die Position der Rastnase 54 im Eingriff mit dem Mundstück 48 bestimmt. Ein angelenkter Handhebel 58 kann vom Bediener betätigt werden, um die Rastnase 54 nach unten zu ziehen, wodurch der Führungskanal 46 mit Mundstück 48 aus dem Setzkopf bei Bedarf herausgezogen werden kann. Man sieht, dass der vordere Bereich der Unterseite des Mundstücks 48 bei 60 angeschrägt ist. Hierdurch kann das Mundstück 48 einfach in die Aufnahme 50 eingeschoben werden und die Schräge 60 drückt den Bolzen 56 mit der Rastnase nach unten. Sobald das Mundstück vollständig in die Aufnahme 50 eingeschoben ist, springt der federvorgespannte Bolzen 56 mit der Rastnase 54 nach oben in die in den Fig. 4A und 4B gezeigten eingerasteten Position.

Man sieht aus den Fig. 4A und 4B, dass ein Funktionselement 10' in einer Warteposition links vom Mundstück 48 angeordnet ist, während sich ein weiteres Funktionselement 10" weiter nach links in einem Stempelkanal 61 auf dem obersten Ende eines Stempels 62 befindet.

Der Setzkopf 41 weist wie üblich ein Befestigungsteil 64 auf, das mittels Schrauben 65 in einem Werkzeug einer Presse oder an einer Hand eines Roboters befestigt ist. Der Stempel 62 ist über einen Bolzen 66 fest mit dem Befestigungsteil 64 des Setzkopfes 41 verbunden, d.h. er bewegt sich gegenüber diesem unteren Teil nicht. Ferner besteht der Setzkopf 41 aus einem oberen Teil 68, der das Mundstück trägt und in diesem Beispiel mittels Federkraft nach oben vorgespannt ist. Die Vorspannfeder ist nicht gezeigt, befindet sich aber in diesem Beispiel innerhalb eines Führungszylinders 70 für den Bolzen 56 und stützt sich einerseits am Werkzeug der Presse, an dem das Befestigungsteil 64 des Setzkopfes angebracht ist und andererseits an einem kolbenartigen Anschlag 72 ab., der am unteren Ende des Bolzens 56 angeordnet ist. Der kolbenartige Anschlag 72 ist innerhalb des Führungszylinders 70 zur Lösung der Rastnase 54 beschränkt gleitbar und drückt wie gesagt gegen einen Endflansch des Führungszylinders 70. Der obere Teil 68 des Setzkopfes wird bei geöffneter Presse so weit vom Befestigungsteil vorgeschoben, dass ein Funktionselement 10' horizontal nach links wie in den Fig. 4A und 4B gezeigt, in den Stempelkanal 61 vor dem oberen Ende des Stempels 62 geschoben werden kann. Der obere Teil 68 des Setzkopfes wird mit dem Befestigungsteil einerseits durch den Stempel 62, der in den Stempelkanal geführt ist, und andererseits durch den Führungszylinder 70, der mit dem oberen Teil 68 des Setzkopfes in einer Führungsbohrung 74 des Befestigungsteils 64 gleitbar angeordnet ist, geführt.

Wenn die Presse schließt oder der Roboter den Setzkopf 41 an das Bauteil 42 presst, weicht das obere Teil 68 des Setzkopfes in Richtung des Befestigungsteils 64 des Setzkopfes aus. Diese Bewegung spannt die sich im Führungszylinder 70 befindende Feder, und das Funktionselement 10" auf dem oberen Ende des Stempels wird an der vorgesehene Position am Bauteil 42 angebracht.

Das Bezugszeichen 80 deutet auf ein Injektionssystem hin, das ausgebildet ist, um die Klebstoffdepots 30 gemäß Fig. 1A auf den Anlageflächen 12 der Funktionselemente 10 anzubringen. Das Injektionssystem 80 ist in diesem Beispiel auf der oberen Seite des vorderen Endes des Mundstücks 48 mittels vier Bolzen 82 befestigt und dient dazu, den Klebstoff innerhalb des Setzkopfes 41, vor der Anbringung des Funktionselements 10 an das Bauteil 42, an das jeweils unmittelbar unterhalb des Injektionssystems liegende Funktionselement 10 anzubringen.

Hierzu ist das Injektionssystem ausgebildet, um den Klebstoff 30 ringförmig oder in Tropfenform auf die Anlagefläche 12 innerhalb des Setzkopfes anzubringen. Zu diesem Zweck besteht das Injektionssystem aus einer den Klebstoff führenden Leitung 84, einen Klebstoff von der Leitung 84 aufnehmenden und einen Verteilerkanal 86 aufweisenden Verteiler 88 mit Gehäuse 90, sowie mehrere Klebstoffe von dem hier ringförmigen Verteilerkanal 86 verteilenden Injektionsbohrungen 92 bzw. Düsen.

Bei jedem Öffnungshub der Presse wird ein neues Funktionselement 10", das mit dem Klebstoff 30 versehen ist, durch den auf die Kette von Funktionselementen ausgeübten Druck, in die Transport- und Setzposition vor dem Setzstempel 62 gebracht, ein weiteres ebenfalls bereits mit Klebstoff versehenes Funktionselement 10' in die Warteposition gebracht und ein neues Funktionselement 10 in Position unterhalb des Injektionssystems 80 gebracht und mit Klebstoff 30 vom Injektionssystem versehen. Bei dem sich anschließenden Schließhub der Presse wird das Funktionselement 10" mittels des Setzstempels 62 an dem Bauteil 42 angebracht, die Presse öffnet sich wieder und der unmittelbar oben beschriebene Zyklus wiederholt sich jeden Öffnungshub der Presse.

Das Injektionssystem 80 bzw. dessen Gehäuse 90 wird somit in diesem Beispiel mittels der Bolzen 82 auf das Mundstück 48 des Funktionselementes in den Setzkopf führenden Zuführkanal 46 angebracht und kann mit dem Mundstück vom Setzkopf gelöst werden. Dies ist insbesondere zu Reinigungszwecken günstig, insbesondere dann, wenn das Mundstück 48 des Zuführkanals 46 mittels einer bewegbaren Rastnase 54 lösbar mit dem Setzkopf 10 verbunden ist.

Einerseits wird dann die Vorrichtung so ausgelegt, um nach der Anbringung des Klebstoffs auf ein Funktionselement 10 dieses entweder sofort in den Stempelkanal des Setzkopfes hineinzuschieben oder erst in eine Warteposition vor dem Stempelkanal zu bringen, so dass sehr wenig Zeit gegeben ist, in der der Klebstoff mit Fremdmittel kontaminiert oder anderweitig beschädigt werden oder verlorengehen kann, und die Gefahr der Kontaminierung des Setzkopfes ist - auch durch die nach oben weisende Position des Klebstoffs 30 an der Anlagefläche 12 - auch sehr gering.

Sollte das Mundstück 48 im Bereich des vorderen Endes, d.h. dort, wo das Injektionssystem 80 angeordnet ist, mit Klebstoffresten verdreckt werden, so kann das Injektionssystem mit dem Mundstück 48 durch Lösen der Rastnase 54 schnell entfernt und gereinigt werden. Obwohl in dieser Ausführungsform eine einzelne Leitung 84 zur Speisung des Klebstoffs in das Injektionssystem vorgesehen ist, kann bei Verwendung eines Zweikomponentenklebers oder eines Mehrkomponentenklebers die Anzahl der Leitungen entsprechend gewählt werden oder die Leitung mit konzentrischen Leitungspassagen realisiert werden. Auch kann bei Verwendung eines Zweikomponentenklebers oder eines Mehrkomponentenklebers ein statischer Mischer innerhalb der Leitung 84 vorzugsweise unmittelbar vor dem Gehäuse 90 des Injektionssystems oder innerhalb des Verteilerkanals eingesetzt werden. Evtl. würde es Sinn machen, den statischen Mischer, der als auswechselbares Wegwerfteil ausgebildet sein kann, mit einer ausgewählten Entfernung vom Setzkopf in die Leitung einzubauen, damit der Klebstoff bereits bei Ablage auf die Anlageflächen 12 der Funktionselemente 10 einen Reifegrad erreicht hat, der einerseits eine einwandfreie Verklebung am Bauteil 42 ermöglicht, anderseits aber bereits so fortgeschritten ist, dass die Verklebung kurz nach der Anbringung am Bauteil eine ausreichende Festigkeit erreicht hat, dass die Verklebung als permanent angesehen werden kann. Auch dies trägt zu der Vermeidung von Kontamination innerhalb des Setzkopfes 41 bzw. der Presse bei.

Das Injektionssystem muss allerdings nicht am Mundstück 48 befestigt werden, denkbar wäre es auch, das Injektionssystem am Setzkopf direkt zu montieren, zum Beispiel oberhalb der von dem Element 10' angenommenen Warteposition, wodurch das Funktionselement 10' direkt nach dem Versehen mit Klebstoff unmittelbar in den Stempelkanal eingeführt werden kann.

Ein Spülsystem (hier nicht gezeigt) kann im Setzkopf 41 integriert werden, um Klebstoffreste bei Bedarf aus dem Setzkopf auszuspülen. Besonders günstig ist es, wenn das Spülsystem Spülmittel in das Injektionssystem 80, beispielsweise in dessen Verteilerkanal 86 einspeist. Hierfür ist es lediglich notwendig, eine Spülleitung ähnlich der Klebstoffleitung 84 vorzusehen. Wenn das Mundstück 48 von dem Setzkopf 41 lösbar ist, dann kann das Spülsystem im Bereich des Mundstücks das Injektionssystem mit Klebstoff lösendem, über die Spülleitung gelieferten Mittel spülen, und somit Reste von Klebstoff mit dem flüssigen Spülmittel aus dem Mundstück und aus dem Injektionssystem in einen Abfangbehälter herausspülen.

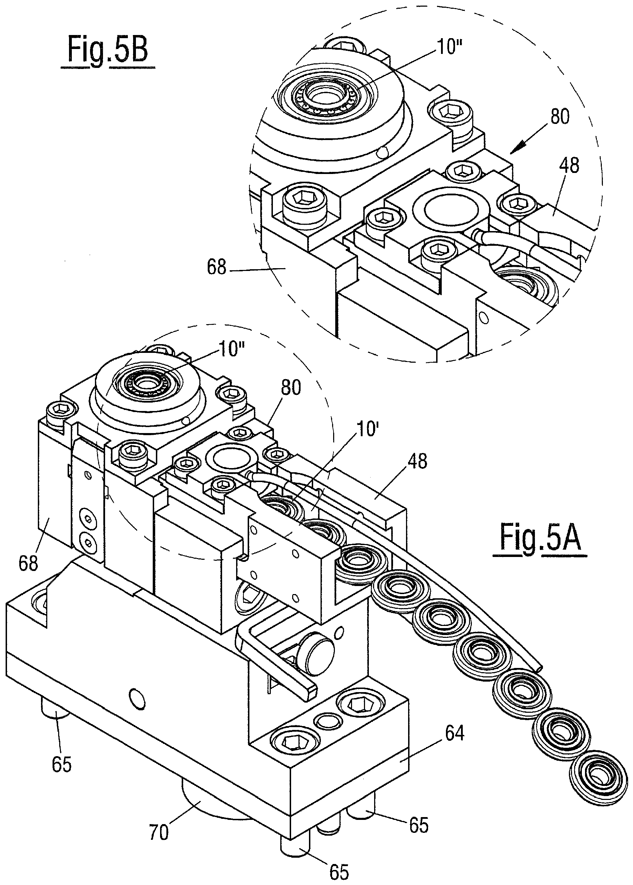

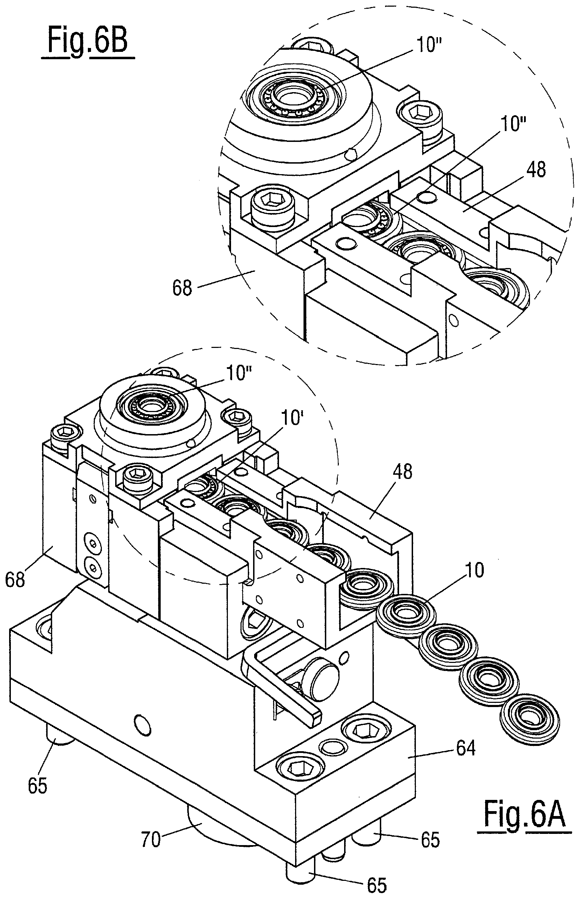

Die Figuren 5A und 5B sowie 6A und 6B zeigen die gleiche Vorrichtung wie die Fig. 3A und 3B sowie 4A und 4B, so dass die Beschreibung der Fig. 3A und 3B sowie 4A und 4B auch für die Figuren 5A und 5B sowie 6A und 6B gilt. Bei den Figuren 5A und 5B wird die Oberseite des Führungskanals entfernt bzw. im weggeschnittenen Zustand gezeigt, um die Anordnung übersichtlicher zu gestalten. Bei den Figuren 6A und 6B ist zusätzlich das Injektionssystem vom Mundstück 48 abgeschraubt, um den Eingang für die Funktionselemente 10 in den Stempelkanal klarer darzustellen.

Es kann sich bei dem Klebstoff um handelsübliche Ein- oder Zweikomponenten-Klebstoffe handeln, die in der Automobilindustrie üblich sind. Zum Beispiel kann es sich um Sika Power 490 C, ein Zweikomponenten-Klebstoff für den Automobilbau und auch speziell für composite Anwendungen handeln. Er kann aber auch für Blechverbindungen eingesetzt werden und hat eine sehr hohe Festigkeit. Als weiteres Beispiel kann Sika Power 430 genannt werden, ein Einkomponenten-Klebstoff für den Automobilbau, ebenfalls mit hoher Festigkeit.

Für beide Varianten ist eine Aushärtung unter erhöhter Temperatur vorgesehen, jedoch weisen die Klebstoffe eine ausreichende Festigkeit für die Montage der Funktionselemente an dem Bauteil auf. Die Aushärtung unter erhöhter Temperatur kann nach der kathodischen Tauchlackierung durch die Wärme erfolgen, die im Ofen zur Aushärtung der kathodischen Tauchlackierung ohnehin zur Anwendung kommt. Die genannten Sika-Klebstoffe können von der Firma Sika Automotive GmbH in Hamburg, Deutschland bezogen werden.

Besonders vorteilhaft bei dieser Art der Klebstoffe ist, dass keine besonderen Maßnahmen ergriffen werden müssen, um die Aushärtung des Klebstoffs herbeizuführen, d.h. es müssen keine Strahlen eingesetzt werden und es ist nicht notwendig, verkapselte Klebstoffe mit besonderen Bindemitteln einzusetzen.

### Bezugszeichenliste

- 10: Funktionselement
- 10': Funktionselement in Warteposition
- 10': Funktionselement im Stempelkanal
- 12: Anlagefläche bzw. Anbringungsfläche
- 14: Flansch
- 16: Zentrierabschnitt
- 18: zylindrische Vorsprung
- 20: Ringfläche
- 22: Gewinde
- 24: Umfangsfläche
- 26: achs-paralleler Bereich
- 28: geründeter Übergang
- 30: Klebstoff, Klebstoffdepot
- 38: Vertiefung
- 40: Anlagefläche
- 41: Vorrichtung bzw. Setzkopf
- 42: Bauteil
- 44: Loch
- 46: Führungskanal
- 47: höhle Passage
- 48: Mundstück
- 50: profilierte Aufnahme
- 52: Bohrung
- 54: Rastnase
- 55: Ringschulter
- 56: Bolzen
- 58: Handhebel
- 60: Schräge vom Mundstück 48
- 61: Stempelkanal
- 62: Stempel
- 64: Befestigungsteil vom Setzkopf 41
- 65: Schrauben
- 66: Bolzen
- 68: oberesTeil vom Setzkopf 41
- 70: Führungszylinder
- 72: kolbenartiger Anschlag
- 80: Injektionssystem
- 82: Bolzen
- 84: Leitung für Klebstoff
- 86: Verteilerkanal
- 88: Verteiler
- 90: Gehäuse vom Injektionssystem 80
- 92: Düsen
- D1: größerer Durchmesser
- D2: kleinerer Durchmesser
- h: Betrag axialer Versatz Anbringungsfläche 12 und Anlagefläche 40
- X: Pfeilrichtung

## Patentansprüche

1. Vorrichtung (41) zur Anbringung von Funktionselementen (10), z.B. aus Metall an einem Bauteil (42), insbesondere an einem aus faserverstärkten Kunststoff bestehenden Bauteil, unter Anwendung eines Setzkopfes, wobei das Funktionselement (10) eine mit Klebstoff (30) versehene Anlagefläche (12) aufweist,
**dadurch gekennzeichnet,**
**dass** die Vorrichtung ausgebildet ist, um den Klebstoff (30) innerhalb des Setzkopfes (41) vor der Anbringung des Funktionselements (10) an das Bauteil (42) an dem Funktionselement anzubringen, und,
**dass** ein Injektionssystem (80) vorgesehen ist, um den Klebstoff (30) ringförmig oder in Tropfenform auf die Anlagefläche (12) innerhalb des Setzkopfes (41) anzubringen, und dass das Injektionssystem (80) im Bereich
eines Mundstücks (48) eines entfernbaren Zuführkanals (46) für die Funktionselemente (10) im Setzkopf (41) angeordnet ist.

2. Vorrichtung (41) nach Anspruch 1, wobei das Injektionssystem (80) oberhalb der Anlagefläche (12) des jeweils mit Klebstoff (30) zu versehenen Funktionselements (10) angeordnet ist, und den Klebstoff nach unten auf diese Anlagefläche (12) abgibt.

3. Vorrichtung (41) nach einem der vorhergehenden Ansprüche, wobei das Injektionssystem (80) aus einer den Klebstoff (30) führenden Leitung (84), einen Klebstoff (30) von der Leitung (84) aufnehmenden und einen Verteilerkanal (86) aufweisenden Verteiler (88) sowie mehrere Klebstoff von dem Verteilerkanal verteilenden Injektionsbohrungen bzw. Düsen (92) besteht.

4. Vorrichtung (41) nach einem der vorhergehenden Ansprüche, wobei das Injektionssystem (80) auf das Mundstück (48) des entfernbaren Zuführkanals (46) für die Einbringung der Funktionselemente in den Setzkopf (41) anbringbar ist.

5. Vorrichtung (41) nach einem der vorhergehenden Ansprüche, wobei das Mundstück (48) des Zuführkanals (46) mittels einer bewegbaren Rastnase (54) lösbar mit dem Setzkopf (41) verbunden ist.

6. Vorrichtung (41) nach einem der vorhergehenden Ansprüche, wobei die Vorrichtung ausgelegt ist, um nach der Anbringung des Klebstoffs (30) auf ein Funktionselement (10) dieses entweder sofort in den Stempelkanal (61) des Setzkopfes (41) hineinzuschieben oder erst in eine Warteposition (10') vor dem Stempelkanal (61) zu bringen.

7. Vorrichtung (41) nach einem der vorhergehenden Ansprüche, wobei ein Spülsystem im Setzkopf (41) integriert ist, um Klebstoffreste (30) bei Bedarf aus dem Setzkopf (41) auszuspülen.

8. Vorrichtung (41) nach Anspruch 7, wobei das Spülsystem Spülmittel in das Injektionssystem (80), beispielsweise in dessen Verteilerkanal (86) einspeist.

9. Verfahren zur Anbringung von Funktionselementen (10), z.B. aus Metall an einem Bauteil (42), insbesondere an einem aus faserverstärktem Kunststoff bestehenden Bauteil, unter Anwendung eines Setzkopfes (41), wobei das Funktionselement (10) eine mit Klebstoff (30) versehene Anlagefläche (12) aufweist,
**dadurch gekennzeichnet,**
**dass** der Klebstoff (30) innerhalb des Setzkopfes (41) vor der Anbringung des Funktionselements (10) an das Bauteil (42) an dem Funktionselement (10) angebracht wird, und dass ein Injektionssystem (80) den Klebstoff (30) im Bereich der Mündung des Zuführkanals (46) für die Funktionselemente (10) auf diesem anbringt, wobei das Injektionssystem (80) oberhalb der Anlagefläche (12) des jeweils mit Klebstoff (30) zu versehenen Funktionselements (10) angeordnet ist und den Klebstoff (30) nach unten auf diese Anlagefläche (12) abgibt.

10. Verfahren nach Anspruch 9, wobei das Injektionssystem (80) den Klebstoff (30) über einen Düsen (92) speisenden Verteilerkanal (86) auf die Funktionselemente (10) verteilt.

11. Verfahren nach einem der vorhergehenden Ansprüche 9 oder 10, wobei die Vorrichtung (41) ausgelegt ist, um nach der Anbringung des Klebstoffs (30) auf ein Funktionselement (10) dieses Funktionselement (10) entweder sofort in den Stempelkanal (61) des Setzkopfes (41) hineinzuschieben oder erst in eine Warteposition (10') vor dem Stempelkanal (61) zu bringen.

12. Verfahren nach einem der vorhergehenden Ansprüche 9 bis 11, wobei ein Spülsystem verwendet wird, um den Zuführkanal im Bereich des Injektionssystems (80) und im Bereich des Mundstücks (48) des Zuführkanals sowie ggf. im Bereich des Setzkopfes (41) von anhaftendem, unerwünschtem Klebstoff zu befreien.

13. Verfahren nach Anspruch 12, wobei das Spülsystem Spülmittel in das Injektionssystem (80), einspeist.

14. Verfahren nach Anspruch 12, wobei das Spülsystem Spülmittel in den Verteilerkanal (86) des Injektionssystems (80) einspeist.

## Claims

1. An apparatus (41) for attaching functional elements (10), e.g. of metal, to a component (42), in particular to a component comprising fiber-reinforced plastic, using a setting head, wherein the functional element (10) has a contact surface (12) provided with adhesive (30),
**characterized in that**
the apparatus is configured to apply the adhesive (30) within the setting head (41) before the attachment of the functional element (10) to the component (42) at the functional element, and
**in that** an injection system (80) is provided to apply the adhesive (30) in ring shape or in droplet form onto the contact surface (12) within the setting head (41), and **in that** the injection system (80) is arranged in the region of a mouth piece (48) of a removable supply passage (46) for the functional elements (10) in the setting head (41).

2. An apparatus (41) in accordance with claim 1,
wherein the injection system (80) is arranged above the contact surface (12) of the functional element (10) to be provided with adhesive (30) in each case and dispenses the adhesive downwardly onto this contact surface (12).

3. An apparatus (41) in accordance with one of the preceding claims,
wherein the injection system (80) comprises a line (84) guiding the adhesive (30), a distributor (88) receiving adhesive (30) from the line (84) and having a distributor passage (86), and a plurality of injection bores or nozzles (92) distributing adhesive from the distributor passage.

4. An apparatus (41) in accordance with any one of the preceding claims, wherein the injection system (80) is attachable to the mouth piece (48) of the removable supply passage (46) for introducing functional elements into the setting head (41).

5. An apparatus (41) in accordance with any one of the preceding claims, wherein the mouth piece (48) of the supply passage (46) is releasably connected to the setting head (41) by means of a movable latching nose (54).

6. An apparatus (41) in accordance with any one of the preceding claims, wherein the apparatus is adapted either to push a functional element (10) immediately into the die channel (61) of the setting head (41) or only to bring it into a waiting position (10') in front of the die channel (61) after the application of the adhesive (30) to said functional element.

7. An apparatus (41) in accordance with any one of the preceding claims, wherein a flushing system is integrated in the setting head (41) to flush adhesive residues (30) out of the setting head (41) as required.

8. An apparatus (41) in accordance with claim 7,
wherein the flushing system feeds flushing means into the injection system (80), for example into its distributor passage (86).

9. A method of attaching functional elements (10), e.g. of metal, to a component (42), in particular to a component comprising fiber-reinforced plastic, using a setting head (41), wherein the functional element (10) has a contact surface (12) provided with adhesive (30),
**characterized in that**
the adhesive (30) is applied within the setting head (41) to the functional element (10) before the attachment of the functional element (10) to the component (42), and **in that** an injection system (80) applies the adhesive (30) in the region of the opening of the supply passage (46) for the functional elements (10) to said functional element (10), with the injection system (80) being arranged above the contact surface (12) of the functional element (10) to be provided with adhesive (30) in each case and dispensing the adhesive (30) downwardly onto this contact surface (12).

10. A method in accordance with claim 9,
wherein the injection system (80) distributes the adhesive (30) onto the functional elements (10) via a distributor passage (86) feeding nozzles (92).

11. A method in accordance with one of the preceding claims 9 or 10,
wherein the apparatus (41) is adapted either to push a functional element (10) immediately into the die channel (61) of the setting head (41) or only to bring it into a waiting position (10') in front of the die channel (61) after the application of the adhesive (30) to said functional element (10).

12. A method in accordance with any one of the preceding claims 9 to 11,
wherein a flushing system is used to liberate the supply passage in the region of the injection system (80) and in the region of the mouth piece (48) of the supply passage as well as optionally in the region of the setting head (41) from adhering, unwanted plastic.

13. A method in accordance with claim 12,
wherein the flushing system feeds flushing means into the injection system (80).

14. A method in accordance with claim 12,
wherein the flushing system feeds flushing means into the distributor passage (86) of the injection system (80).

## Revendications

1. Dispositif (41) pour fixer des éléments fonctionnels (10), par exemple en métal, à un composant (42), en particulier à un composant en matière plastique renforcée par des fibres, à l'aide d'une tête de pose, l'élément fonctionnel (10) présentant une surface d'appui (12) munie de colle (30),
**caractérisé en ce que**
le dispositif est réalisé pour appliquer la colle (30) sur l'élément fonctionnel à l'intérieur de la tête de pose (41), avant que l'élément fonctionnel (10) ne soit fixé au composant (42), et
il est prévu un système d'injection (80) pour appliquer la colle (30) en forme d'anneau ou de goutte sur la surface d'appui (12) à l'intérieur de la tête de pose (41), et **en ce que**
le système d'injection (80) est disposé dans la tête de pose (41) au niveau d'une embouchure (48) d'un canal d'alimentation amovible (46) pour les éléments fonctionnels (10).

2. Dispositif (41) selon la revendication 1,
dans lequel le système d'injection (80) est disposé au-dessus de la surface d'appui (12) de l'élément fonctionnel (10) respectif à munir de colle (30), et délivre la colle vers le bas sur ladite surface d'appui (12).

3. Dispositif (41) selon l'une des revendications précédentes,
dans lequel le système d'injection (80) est constitué par un conduit (84) menant la colle (30), par un distributeur (88) recevant la colle (30) depuis le conduit (84) et présentant un canal distributeur (86), et par plusieurs perçages d'injection ou buses (92) distribuant la colle depuis le canal distributeur.

4. Dispositif (41) selon l'une des revendications précédentes,
dans lequel le système d'injection (80) peut être fixé à l'embouchure (48) du canal d'alimentation amovible (46) pour introduire les éléments fonctionnels dans la tête de pose (41).

5. Dispositif (41) selon l'une des revendications précédentes,
dans lequel l'embouchure (48) du canal d'alimentation (46) est reliée de manière détachable à la tête de pose (41) au moyen d'un ergot d'enclenchement mobile (54).

6. Dispositif (41) selon l'une des revendications précédentes,
dans lequel le dispositif est conçu, après application de la colle (30) sur un élément fonctionnel (10), soit pour pousser ce dernier immédiatement dans le canal d'estampage (61) de la tête de pose (41), soit pour l'amener d'abord dans une position d'attente (10') devant le canal d'estampage (61).

7. Dispositif (41) selon l'une des revendications précédentes,
dans lequel un système de rinçage est intégré dans la tête de pose (41) afin de rincer les résidus de colle (30) hors de la tête de pose (41), si nécessaire.

8. Dispositif (41) selon la revendication 7,
dans lequel le système de rinçage injecte un agent de rinçage dans le système d'injection (80), par exemple dans son canal distributeur (86).

9. Procédé pour fixer des éléments fonctionnels (10), par exemple en métal, à un composant (42), en particulier à un composant en matière plastique renforcée par des fibres, à l'aide d'une tête de pose (41), l'élément fonctionnel (10) présentant une surface d'appui (12) munie de colle (30),
**caractérisé en ce que**
la colle (30) est appliquée sur l'élément fonctionnel (10) à l'intérieur de la tête de pose (41), avant que l'élément fonctionnel (10) ne soit fixé au composant (42), et **en ce que**
au niveau de l'embouchure du canal d'alimentation (46) pour les éléments fonctionnels (10), un système d'injection (80) applique la colle (30) sur celui-ci, le système d'injection (80) étant de préférence disposé au-dessus de la surface d'appui (12) de l'élément fonctionnel (10) respectif à munir de colle (30) et délivrant la colle (30) vers le bas sur ladite surface d'appui (12).

10. Procédé selon la revendication 9,
dans lequel le système d'injection (80) distribue la colle (30) sur les éléments fonctionnels (10) via un canal distributeur (86) alimentant des buses (92).

11. Procédé selon l'une des revendications précédentes 9 ou 10,
dans lequel le dispositif (41) est conçu, après application de la colle (30) sur un élément fonctionnel (10), soit pour pousser cet élément fonctionnel (10) immédiatement dans le canal d'estampage (61) de la tête de pose (41), soit pour l'amener d'abord dans une position d'attente (10') devant le canal d'estampage (61).

12. Procédé selon l'une des revendications précédentes 9 à 11,
dans lequel un système de rinçage est utilisé pour débarrasser le canal d'alimentation de la colle adhérente non désirée, au niveau du système d'injection (80) et au niveau de l'embouchure (48) du canal d'alimentation et, le cas échéant, au niveau de la tête de pose (41).

13. Procédé selon la revendication 12,
dans lequel le système de rinçage injecte un agent de rinçage dans le système d'injection (80).

14. Procédé selon la revendication 12,
dans lequel le système de rinçage injecte un agent de rinçage dans le canal distributeur (86) du système d'injection (80).
